# FASCICULE DE BREVET EUROPEEN

(11) **EP 3 087 265 B1**
(45) Date de publication et mention de la délivrance du brevet: **07.02.2018**
(21) Numéro de dépôt: 14833513.6
(22) Date de dépôt: 22.12.2014
(51) Int. Cl.: F02C 7/12, B64D 29/00, F02C 7/25

(54) **ENSEMBLE PROPULSIF D'AERONEF AVEC SYSTEME D'EXTINCTION DE FEU ET PROCEDE DE VENTILATION**
FLUGZEUGANTRIEBSANORDNUNG MIT FEUERLÖSCHSYSTEM UND ENTLÜFTUNGSVERFAHREN
AIRCRAFT PROPULSION ASSEMBLY WITH FIRE EXTINGUISHING SYSTEM AND VENTILATION METHOD

(30) Priorité: 24.12.2013 FR 1363544
(43) Date de publication de la demande: 02.11.2016
(73) Titulaire: Safran Aircraft Engines, 75015 Paris (FR)
(72) Inventeur: CHARLEMAGNE, Pierrick, F-77550 Moissy-Cramayel cedex (FR); LEROUX, Delphine, F-77550 Moissy-Cramayel cedex (FR)
(74) Mandataire: Gevers & Orès
(86) Numéro de dépôt international: PCT/FR2014/053497
(87) Numéro de publication internationale: WO 2015/097391

(56) Documents cités:
- EP-A1- 2 624 353
- WO-A2-2006/076649
- GB-A- 2 057 574
- US-A- 6 082 464

## Description

### DOMAINE TECHNIQUE

La présente invention concerne le domaine de la ventilation d'un ensemble propulsif d'aéronef.

### ETAT DE L'ART

Un ensemble propulsif d'aéronef comprend un moteur et une nacelle entourant ce moteur qui est en général une turbomachine. La nacelle comprend un carter de révolution délimitant une veine annulaire d'écoulement d'un flux d'air autour du moteur, ce flux d'air étant appelé flux secondaire dans le cas d'une turbomachine à double flux. La nacelle définit autour du carter une première cavité annulaire. Certains équipements de l'ensemble propulsif sont montés dans la nacelle, c'est-à-dire dans la cavité annulaire précitée, et peuvent être fixés sur son carter. La paroi externe de la nacelle comprend en général des capots amovibles pour autoriser l'accès à ces équipements pendant une opération de maintenance.

Le moteur comprend une veine annulaire interne d'écoulement d'un flux d'air appelé flux primaire dans le cas d'une turbomachine à double flux. Le moteur comprend des carters de révolution coaxiaux qui sont entourés par une paroi de révolution qui délimite intérieurement la veine du flux secondaire. Cette paroi s'étend à distance des carters du moteur et définit autour d'eux une seconde cavité annulaire. Certains équipements sont montés dans cette seconde cavité annulaire.

Les équipements montés dans les cavités de l'ensemble propulsif sont plus ou moins sensibles à la chaleur et sont ventilés en fonctionnement. C'est notamment le cas d'un calculateur ou ordinateur embarqué du type EEC, qui permet notamment de contrôler des actionneurs du moteur en vue d'optimiser les performances de la turbomachine (FR-B1-2 960 912). Cet ordinateur est en général monté avec d'autres équipements (boîte d'engrenages AGB (*Accessory Gear Box*)*,* échangeurs, etc.) dans la nacelle.

En vue de la ventilation de la cavité interne de la nacelle, celle-ci comprend une écope de prélèvement d'air en vol, l'air prélevé étant ensuite évacué par une grille de sortie d'air de la nacelle. Cependant, au sol, cette ventilation est quasi-inexistante et la convection naturelle dans l'espace annulaire de la nacelle peut se révéler insuffisante pour assurer la ventilation de ses équipements. Le calculateur dégage une puissance thermique importante en fonctionnement qu'il faut dissiper, que le moteur fonctionne ou soit à l'arrêt. De plus, même lorsque le moteur est à l'arrêt postérieurement à un fonctionnement, les parties chaudes du moteur continuent de rayonner et de chauffer des parties périphériques plus froides du moteur, qui peuvent ainsi, à l'arrêt moteur, atteindre des températures proches voire supérieures à leurs températures lorsque le moteur fonctionne.

Il existe donc un réel besoin d'un système capable de ventiler ce type de cavité d'un ensemble propulsif, même lorsque le moteur est à l'arrêt.

Par ailleurs, un ensemble propulsif d'aéronef est équipé d'un système d'extinction d'un feu pouvant apparaître dans le moteur et/ou dans la nacelle. Ce système d'extinction comporte des moyens d'alimentation en agent extincteur d'au moins une canalisation de distribution de l'agent extincteur, qui débouche dans une cavité du moteur et/ou une cavité de la nacelle. Ce système d'extinction est en général associé à un système de détection de feu (du type FDU, de l'anglais *Fire Detection Unit*) qui comprend des capteurs montés sur le moteur et/ou la nacelle et qui est destiné à émettre un signal d'alerte à l'attention du pilote de l'aéronef lorsqu'au moins l'un des capteurs détecte l'apparition d'un feu.

Dans la technique actuelle, la canalisation du système d'extinction ne sert qu'à la distribution de l'agent extincteur. Comme les cas d'apparition d'un feu sont rares, cette canalisation n'est en général jamais utilisée. Elle est toutefois toujours présente dans un ensemble propulsif d'aéronef pour des raisons de sécurité et de certification. Un système d'extinction d'un feu selon la technique antérieure est divulgué dans US6082464 A. La présente invention apporte une solution simple, efficace et économique au besoin précité de la technique antérieure.

### EXPOSE DE L'INVENTION

L'invention propose un ensemble propulsif d'aéronef, comportant un moteur, une nacelle entourant le moteur, et un système d'extinction d'un feu pouvant apparaître dans le moteur et/ou dans la nacelle, ce système d'extinction comportant des moyens d'alimentation en agent extincteur d'au moins une canalisation de distribution dudit agent extincteur, qui débouche dans une cavité du moteur et/ou une cavité de la nacelle, caractérisé en ce qu'il comprend en outre des moyens d'alimentation en air de ladite au moins une canalisation en vue de la ventilation de la ou les cavités.

L'invention consiste donc à affecter à un moyen connu une fonction supplémentaire nouvelle. En effet, la canalisation de distribution de l'agent extincteur du système d'extinction de feu est, comme dans la technique antérieure, utilisée pour distribuer cet agent dans la ou les cavités de l'ensemble propulsif dans le cas où un feu apparaîtrait. Selon l'invention, cette canalisation sert en outre à ventiler cette ou ces cavités. La canalisation est pour cela associée à des moyens d'alimentation en air qui délivre un débit d'air à la canalisation, ce débit d'air étant alors acheminé par la canalisation jusqu'à la ou les cavités à ventiler. L'invention permet donc d'utiliser un moyen existant (canalisation) pour acheminer de l'air de ventilation jusqu'à une cavité de la nacelle et/ou du moteur, ce moyen existant étant utilisé pour une toute autre chose dans la technique antérieure (distribution d'agent extincteur). Comme indiqué dans ce qui précède, le système d'extinction d'un ensemble propulsif est rarement utilisé. Sa canalisation peut dont l'être pour ventiler les cavités de l'ensemble propulsif, même lorsque le moteur est à l'arrêt. En effet, le fonctionnement des moyens d'alimentation en air de la canalisation sont avantageusement indépendants du moteur et peuvent donc fonctionner à l'arrêt du moteur. Les équipements montés dans les cavités de l'ensemble propulsif peuvent ainsi être ventilés lorsque le moteur est à l'arrêt, ce qui permet d'augmenter la durée de vie de ces équipements.

Les moyens d'alimentation en air comprennent de préférence un ventilateur. Ce ventilateur peut être un ventilateur électrique.

Les moyens d'alimentation peuvent être reliés par une vanne et/ou un clapet anti-retour à ladite au moins une canalisation. Ils peuvent être reliés à cette canalisation par une dérivation en Y par exemple.

Les moyens d'alimentation peuvent être logés dans la nacelle.

En variante, ils peuvent être logés dans un pylône de liaison de l'ensemble propulsif à l'aéronef. La liaison entre un ensemble propulsif et son pylône comprend généralement une paroi anti-feu adaptée à limiter la transmission d'un feu qui surviendrait dans l'ensemble propulsif. Les moyens d'alimentation sont ainsi protégés d'un feu qui pourrait apparaître dans la nacelle.

Les moyens d'alimentation peuvent être configurés pour délivrer un débit d'air compris entre 1 et 500g/s.

Avantageusement, la canalisation peut comprendre au moins une sortie qui est située à proximité d'une écope d'entrée d'air de la nacelle ou du moteur.

La présente invention concerne également un procédé de ventilation d'une cavité d'un moteur et/ou d'une cavité d'une nacelle d'un ensemble propulsif d'aéronef, cet ensemble propulsif comportant un système d'extinction d'un feu pouvant apparaître dans le moteur et/ou dans la nacelle, ce système d'extinction comportant des moyens d'alimentation en agent extincteur d'au moins une canalisation de distribution dudit agent extincteur qui débouche dans la cavité du moteur et/ou la cavité de la nacelle, caractérisé en ce qu'il consiste à alimenter en air ladite au moins une canalisation.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 est une vue schématique de côté d'un ensemble propulsif d'aéronef,
- la figure 2 est une vue très schématique de face d'un ensemble propulsif d'aéronef,
- la figure 3 est une vue correspondant à la figure 2 et illustrant un mode de réalisation de l'invention ; et
- la figure 4 est une vue correspondant à la figure 2 et illustrant une variante de réalisation de l'invention.

### DESCRIPTION DETAILLEE

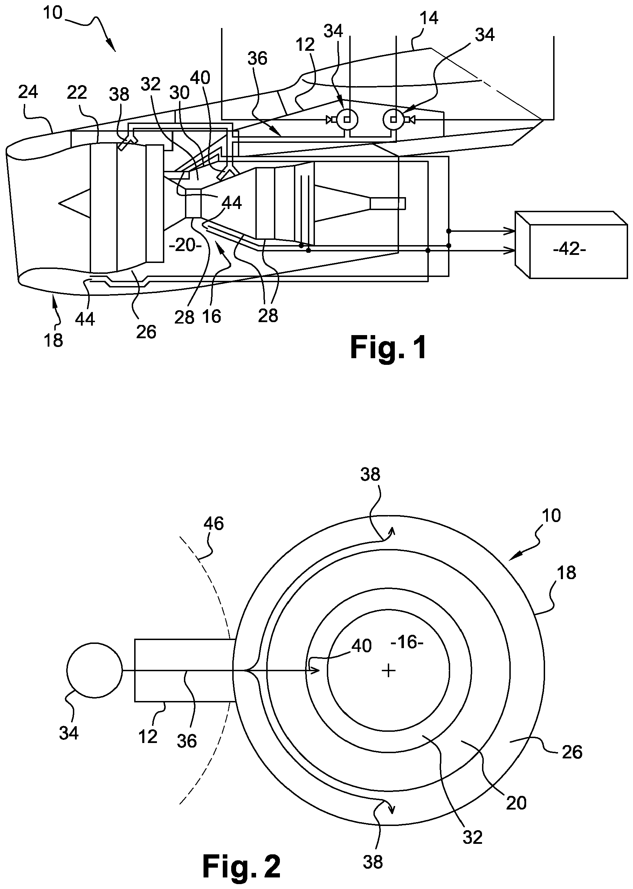

On se réfère d'abord à la figure 1 qui représente un ensemble propulsif 10 d'un aéronef, cet ensemble propulsif comportant un pylône 12 de liaison à une partie structurale de l'aéronef, qui est ici une aile 14 de l'aéronef.

L'ensemble propulsif 10 comprend un moteur 16 du type turbomachine entouré par une nacelle 18, la nacelle 18 définissant une première veine annulaire 20 d'écoulement d'un flux secondaire autour du moteur qui comprend une seconde veine interne (non représentée) d'écoulement d'un flux primaire.

Le moteur 16 comprend typiquement d'amont en aval, dans le sens d'écoulement des flux, une soufflante, au moins un module de compression, une chambre de combustion, au moins un module de turbine, et une tuyère d'éjection des gaz de combustion.

La soufflante du moteur 16 est entourée par un carter 22 de la nacelle 18, qui est lui-même entouré par une paroi de révolution 24 de la nacelle. Des équipements sont montés dans la cavité annulaire 26 délimitée par la paroi externe 24 et le carter 22 de la nacelle 18.

Le module de compression, la chambre de combustion, et le module de turbine comprennent des carters externes 28 qui sont entourés par une paroi de révolution 30. Cette paroi 30 délimite intérieurement la veine 20 du flux secondaire et s'étend à distance des carters externes 28 pour définir avec ceux-ci une cavité annulaire 32 dans laquelle sont également logés des équipements.

L'ensemble propulsif 10 comprend en outre un système d'extinction d'un feu pouvant apparaître dans le moteur 16 et/ou dans la nacelle 18. Ce système d'extinction comporte des moyens 34 d'alimentation en agent extincteur d'au moins une canalisation 36 de distribution de l'agent extincteur.

Comme cela est visible dans le dessin, cette canalisation 36 peut comprendre plusieurs entrées (ici au nombre de deux) qui sont chacune reliée à des moyens d'alimentation 34, et plusieurs sorties 38 (ici au nombre de deux). Dans l'exemple représenté, la canalisation 36 comprend une première sortie 38 dans la cavité 26 de la nacelle 18 et une seconde sortie 40 dans la cavité 32 du moteur 16. Chaque sortie 38, 40 a ici une forme en Y et comprend deux orifices de sortie pour la projection d'agent extincteur dans des directions sensiblement tangentes au carter 22 ou aux carters 28. La sortie 38 est de préférence située à proximité d'une écope d'entrée d'air de la nacelle 16 (pour la ventilation de la cavité 26 en fonctionnement du moteur) et la sortie 40 est de préférence située à proximité d'une écope d'entrée d'air du moteur (pour la ventilation de la cavité 32 en fonctionnement du moteur).

Les sorties 38 et 40 sont orientées pour coopérer respectivement avec les écopes d'entrée d'air de la nacelle 18 et du moteur 16 afin de générer des flux dans des directions similaires. Ceci permet d'éviter que l'agent extincteur ne sorte des zones à éteindre avant de les avoir remplies. De plus, avec l'invention, l'aération par l'écope ou par l'invention est similaire et simplifie la gestion des flux de ventilation.

La canalisation 36 est réalisée dans un matériau résistant au feu et en particulier aux très hautes températures (par exemple supérieures à 1000°C).

Les moyens d'alimentation 34 peuvent comprendre un réservoir d'agent extincteur (tel que du Halon par exemple) sous pression, dont une sortie est reliée à une entrée de la canalisation 36 par un système d'amorçage tel qu'un amorceur pyrotechnique. Ce système d'amorçage est commandé à distance par le pilote de l'avion, depuis le poste de pilotage de l'aéronef.

Le système d'extinction est associé à un système 42 de détection de feu (par exemple du type FDU) qui est relié à des capteurs 44 montés sur le moteur 16 et la nacelle 18 et qui sont chacun destinés à émettre un signal d'alerte à l'attention du pilote de l'aéronef lorsqu'au moins l'un des capteurs 44 détecte l'apparition d'un feu. Les capteurs 44 comprennent par exemple des thermocouples.

Comme cela est schématiquement représenté en figure 2, les moyens d'alimentation 34 sont en général montés dans le périmètre de l'aéronef, ce périmètre étant ici schématiquement délimité par les traits pointillés 46 et comportant le pylône 12. La canalisation 36 s'étend depuis les moyens d'alimentation 34 jusqu'aux cavités 26, 32. La canalisation 36 doit donc traverser la veine du flux secondaire 20 et peut pour cela être logée dans un bras tubulaire de passage de servitudes d'un carter intermédiaire du moteur. Les traits pointillés 46 symbolisent une paroi anti-feu à traverser, il faut donc à cet endroit le minimum de canalisation pour limiter les perçages dans cette paroi.

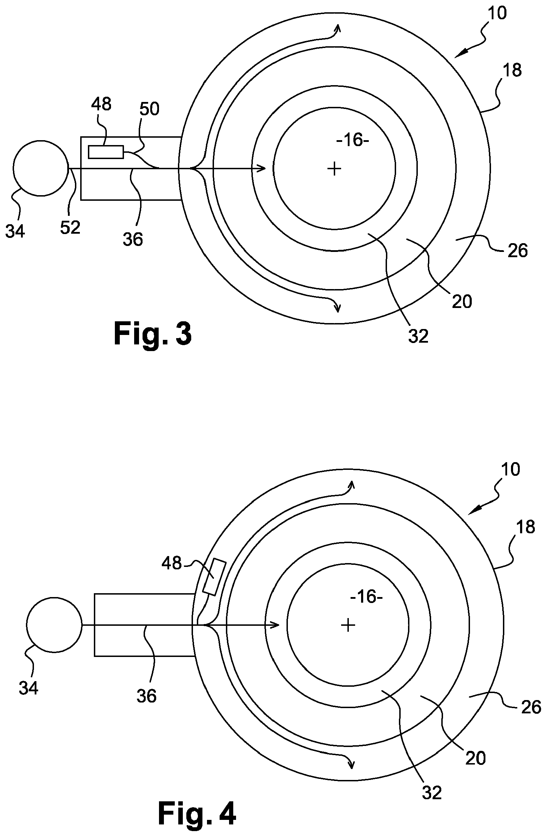

On se réfère maintenant à la figure 3 qui représente un premier mode de réalisation de l'invention.

Selon l'invention, des moyens sont prévus pour alimenter en air la canalisation 36, cet air étant destiné à être acheminé par la canalisation 36 jusqu'aux cavités 26, 32 en vue de leur ventilation.

Dans l'exemple représenté, les moyens d'alimentation en air comprennent un ventilateur électrique 48 dont la sortie d'air 50 est reliée à la canalisation 36, au voisinage de son entrée 52 reliée aux moyens d'alimentation 34. Cette liaison peut se faire par une dérivation en Y (de préférence en amont de la paroi anti-feu) dont l'une des branches latérales est reliée au ventilateur 48, l'autre branche latérale est reliée aux moyens d'alimentation 34, et la branche médiane est reliée aux cavités 26, 32. La liaison entre le ventilateur 48 et la canalisation 36 peut comprendre une électrovanne ou un clapet anti-retour.

Le ventilateur 48 peut être configuré pour délivrer un débit d'air compris entre 1 et 500g/s.

Le ventilateur 48 est de préférence commandé électriquement par des moyens de contrôle indépendants du moteur 16 de façon à ce qu'il puisse fonctionner à l'arrêt moteur. Ces moyens de contrôle sont par exemple intégrés au réseau électronique de l'aéronef.

Dans l'exemple représenté en figure 3, le ventilateur 48 est logé dans le pylône 12.

La variante de réalisation de l'invention représentée en figure 4 diffère du mode de réalisation décrit dans ce qui précède essentiellement en ce que le ventilateur 48 est logé dans la nacelle 18, c'est-à-dire dans la cavité annulaire 26 de la nacelle. Le ventilateur 48 peut être commandé électriquement par des moyens de contrôle du moteur qui sont configurés pour fonctionner et rester opérationnels à l'arrêt moteur.

Comme cela est représenté en figure 1, l'invention peut être appliquée à un ensemble propulsif 10 fixé à une aile 14 d'un aéronef, le pylône 12 étant alors situé à 12h (douze heures) par analogie avec le cadran d'une horloge. En variante et comme représenté aux figures 3 et 4, l'invention peut être appliquée à un ensemble propulsif 10 fixé au fuselage de l'aéronef, le pylône 12 étant alors par exemple situé à 3h ou 9h. Il est également envisageable que l'invention soit appliquée à d'autres types d'ensembles propulsifs tels qu'à ceux au moins en partie enterrés dans le fuselage de l'aéronef.

## Revendications

1. Ensemble propulsif (10) d'aéronef, comportant un moteur (16), une nacelle (18) entourant le moteur, et un système d'extinction d'un feu pouvant apparaître dans le moteur et/ou dans la nacelle, ce système d'extinction comportant des moyens (34) d'alimentation en agent extincteur d'au moins une canalisation (36) de distribution dudit agent extincteur, qui débouche dans une cavité (32) du moteur et/ou une cavité (26) de la nacelle, **caractérisé en ce qu'**il comprend en outre des moyens (48) d'alimentation en air de ladite au moins une canalisation en vue de la ventilation de la ou les cavités.

2. Ensemble propulsif (10) selon la revendication 1, **caractérisé en ce que** les moyens d'alimentation en air comprennent un ventilateur (48).

3. Ensemble propulsif (10) selon la revendication 2, **caractérisé en ce que** le ventilateur (48) est un ventilateur électrique.

4. Ensemble propulsif (10) selon l'une des revendications précédentes, **caractérisé en ce que** les moyens (48) d'alimentation en air sont reliés par une vanne et/ou un clapet anti-retour à ladite au moins une canalisation (36).

5. Ensemble propulsif (10) selon l'une des revendications précédentes, **caractérisé en ce que** les moyens (48) d'alimentation en air sont logés dans la nacelle (18).

6. Ensemble propulsif (10) selon l'une des revendications 1 à 4, **caractérisé en ce qu'**il comprend en outre un pylône (12) de liaison de l'ensemble propulsif à l'aéronef, lesdits moyens (48) d'alimentation en air étant logés dans le pylône.

7. Ensemble propulsif (10) selon l'une des revendications précédentes, **caractérisé en ce que** les moyens (48) d'alimentation en air sont configurés pour délivrer un débit d'air compris entre 1 et 500g/s.

8. Ensemble propulsif (10) selon l'une des revendications précédentes, **caractérisé en ce que** la canalisation (36) comprend au moins une sortie (38, 40) qui est située à proximité d'une écope d'entrée d'air de la nacelle (18) ou du moteur (16).

9. Procédé de ventilation d'une cavité (32, 26) d'un moteur (16) et/ou d'une cavité d'une nacelle (18) d'un ensemble propulsif (10) d'aéronef, cet ensemble propulsif comportant un système d'extinction d'un feu pouvant apparaître dans le moteur et/ou dans la nacelle, ce système d'extinction comportant des moyens (34) d'alimentation en agent extincteur d'au moins une canalisation (36) de distribution dudit agent extincteur, qui débouche dans la cavité du moteur et/ou la cavité de la nacelle, **caractérisé en ce qu'**il consiste à alimenter en air ladite au moins une canalisation.

## Patentansprüche

1. Antriebseinheit (10) eines Luftfahrzeugs, umfassend einen Motor (16), eine Gondel (18), die den Motor umgibt, und ein Löschsystem eines Feuers, das in dem Motor und/oder der Gondel auftreten kann, wobei dieses Löschsystem Mittel (34) zum Zuführen von Löschmittel zu mindestens einer Verteilungsleitung (36) des Löschmittels aufweist, die in einen Hohlraum (32) des Motors und/oder einen Hohlraum (26) der Gondel mündet, **dadurch gekennzeichnet, dass** sie ferner Mittel (48) zum Zuführen von Luft zu der mindestens einen Leitung zum Belüften des oder der Hohlräume aufweist.

2. Antriebseinheit (10) nach Anspruch 1, **dadurch gekennzeichnet, dass** die Mittel zum Zuführen von Luft einen Ventilator (48) aufweisen.

3. Antriebseinheit (10) nach Anspruch 2, **dadurch gekennzeichnet, dass** der Ventilator (48) ein elektrischer Ventilator ist.

4. Antriebseinheit (10) nach einem der vorhergehenden Ansprüche, **dadurch gekennzeichnet, dass** die Mittel (48) zum Zuführen von Luft durch ein Ventil und/oder ein Rückschlagventil mit der mindestens einen Leitung (36) verbunden sind.

5. Antriebseinheit (10) nach einem der vorhergehenden Ansprüche, **dadurch gekennzeichnet, dass** die Mittel (48) zum Zuführen von Luft in der Gondel (18) angeordnet sind.

6. Antriebseinheit (10) nach einem der Ansprüche 1 bis 4, **dadurch gekennzeichnet, dass** sie einen Mast (12) zum Verbinden der Antriebseinheit mit dem Luftfahrzeug aufweist, wobei die Mittel (48) zum Zuführen von Luft in dem Mast angeordnet sind.

7. Antriebseinheit (10) nach einem der vorhergehenden Ansprüche, **dadurch gekennzeichnet, dass** die Mittel (48) zum Zuführen von Luft konfiguriert sind, um einen Luftdurchsatz bereitzustellen, der zwischen 1 und 500 g/s beträgt.

8. Antriebseinheit (10) nach einem der vorhergehenden Ansprüche, **dadurch gekennzeichnet, dass** die Leitung (36) mindestens einen Auslass (38, 40) aufweist, der in der Nähe von einer Lufteinlasshutze der Gondel (18) oder des Motors (16) angeordnet ist.

9. Verfahren zum Belüften eines Hohlraums (32, 26) eines Motors (16) und/oder eines Hohlraums einer Gondel (18) einer Antriebseinheit (10) eines Luftfahrzeugs, wobei diese Antriebseinheit ein Löschsystem eines Feuers, das in dem Motor und/oder der Gondel auftreten kann, aufweist, wobei dieses Löschsystem Mittel (34) zum Zuführen von Löschmittel zu mindestens einer Verteilungsleitung (36) des Löschmittels aufweist, die in einen Hohlraum des Motors und/oder einen Hohlraum der Gondel mündet, **dadurch gekennzeichnet, dass** es darin besteht, der mindestens einen Leitung Luft zuzuführen.

## Claims

1. Aircraft propulsion assembly (10) comprising an engine (16), a nacelle (18) surrounding the engine, and a system for extinguishing a fire which may break out in the engine and/or in the nacelle, this extinguishing system comprising means (34) for supplying extinguishing agent to at least one pipe (36) which is intended for dispensing said extinguishing agent and leads into a cavity (32) in the engine and/or a cavity (26) in the nacelle, **characterised in that** said propulsion assembly further comprises means (48) for supplying air to said at least one pipe in order to ventilate the cavity/cavities.

2. Propulsion assembly (10) according to claim 1, **characterised in that** the air supply means comprise a ventilator fan (48).

3. Propulsion assembly (10) according to claim 2, **characterised in that** the ventilator fan (48) is an electric ventilator fan.

4. Propulsion assembly (10) according to any of the preceding claims, **characterised in that** the air supply means (48) are connected to said at least one pipe (36) by a valve and/or a non-return flap.

5. Propulsion assembly (10) according to any of the preceding claims, **characterised in that** the air supply means (48) are housed in the nacelle (18).

6. Propulsion assembly (10) according to any of claims 1 to 4, **characterised in that** it further comprises a strut (12) for connecting the propulsion assembly to the aircraft, said air supply means (48) being housed in the strut.

7. Propulsion assembly (10) according to any of the preceding claims, **characterised in that** the air supply means (48) are designed to output an air flow rate of between 1 and 500 g/s.

8. Propulsion assembly (10) according to any of the preceding claims, **characterised in that** the pipe (36) comprises at least one outlet (38, 40) which is located close to an air intake scoop of the nacelle (18) or of the engine (16).

9. Method for ventilating a cavity (32, 26) in an engine (16) and/or a cavity in a nacelle (18) of an aircraft propulsion assembly (10), this propulsion assembly comprising a system for extinguishing a fire which may break out in the engine and/or in the nacelle, this extinguishing system comprising means (34) for supplying extinguishing agent to at least one pipe (36) which is intended for dispensing said extinguishing agent and leads into the cavity in the engine and/or the cavity in the nacelle, **characterised in that** said method comprises supplying air to said at least one pipe.
